# EUROPEAN PATENT APPLICATION

(11) **EP 4 636 790 A1**
(43) Date of publication of application: **22.10.2025**
(21) Application number: 24170316.4
(22) Date of filing: 15.04.2024
(51) Int. Cl.: H01F 1/44

(54) **MAGNETOELECTRIC LIQUID**

(71) Applicant: Institute Jozef Stefan, 1000 Ljubljana (SI); Ustav fyziky plazmatu AV CR, v.v.i. (Institute of Plasma Physics of the Czech Academy of Sciences), 182 00 Prague 8 (CZ)
(72) Inventor: LISJAK, Darja, 1000 Ljubljana (SI); MERTELJ, Alenka, 1000 Ljubljana (SI); TUFANI, Ali, 1000 Ljubljana (SI); CAMPELJ, Stanislav, 1000 Ljubljana (SI); LANDOVSKY, Tomas, 182 00 Prague (CZ); NOVOTNA, Vladimira, 182 00 Prague (CZ); CIGL, Martin, 182 00 Prague (CZ)
(74) Representative: Mewburn Ellis LLP

(57) **Abstract**

The present invention provides a magnetoelectric liquid comprising magnetoelectric nanostructures dispersed in a solvent, wherein the magnetoelectric nanostructures comprise a flattened body possessing a magnetic dipole that is functionalised with a polar ligand. The invention beneficially provides a magnetoelectric liquid which demonstrates sensitive magnetoelectric coupling at room temperature. The present invention also relates to a method of preparation of the magnetoelectric liquid.

## Description

### Field of the Invention

The present invention relates to magnetoelectric (ME) liquids and magnetoelectric nanostructures that form part of said liquid. The present invention also relates to methods of preparation of the magnetoelectric liquids and nanostructures. Specifically, though not exclusively, the present invention relates to magnetoelectric liquids comprising hexaferrite nanoplatelets functionalised on one face with polar ligands, which are subsequently dispersed in a carrier liquid.

### Background

ME multiferroic materials simultaneously exhibit ferroelectricity and ferromagnetism. These materials have the unique ability to have their magnetization and polarization manipulated by applying external electric and magnetic fields. This phenomenon is known as the ME coupling effect.

ME multiferroic materials are typically in a solid state and can be single-phase or composite materials. In most single-phase materials, ferroelectric order is intrinsically coupled with the antiferromagnetic order resulting in ME coupling well below room temperature or weak ME coupling coefficients at room temperature. The composites comprise two phases: (1) ferroelectric (FE) phase and (2) ferromagnetic (FM; which stands for ferromagnetic and ferrimagnetic) or antiferromagnetic (anti-FM) phase. These materials show direct and converse ME effects by applying relatively strong magnetic (1-10 T) and electric (1-100 MV/m) fields.

In contrast, liquid ME materials should be sensitive to much lower magnetic and electric fields which is highly desirable.

One kind of liquid alternative to the solid ME composites described above is based on solid ferroic materials and comprises: (1) FE and FM particles, each simultaneously dispersed in an insulating liquid [1,2] or (2) core-shell FM-FE particles within an insulating liquid [3-5].

Gao et. al. [4] propose a "multiferroic fluid" composed of the FM-FE core-shell multiferroic nanoparticles (i.e., (Co/Ni/Ni,Zn)Fe₂O₄-BaTiO₃) suspended in an insulating silicon oil. In that case colloidal instability and sedimentation of the FM-FE nanoparticles under external fields results in misinterpretation of the liquid's behaviour. For example, the change from the expected superparamagnetic behaviour of a stable magnetic colloid to the typical FM hysteresis with high coercivity does not indicate the ME coupling but instead the fact that free rotation of nanoparticles was no longer possible after applying an electric field due to the agglomeration of the nanoparticles. At the same time, the polarization decreased significantly due to the increasing fraction of the nanoparticles, which is in contradiction to what is expected. Moreover, a minor effect of the magnetic field on the polarization was observed only for the lowest fraction of the nanoparticles suggesting that the so-called "multiferroic" fluid might be stable only at very low particle fraction, i.e., ≤ 1 vol.%. The second distinct property of a ME multiferroic material, i.e., spontaneous magnetization and polarization, were not presented.

CN105006329A describes a system based on multiferroic nanoparticles, carrier liquid and surfactant. The multiferroic nanoparticles are composed of a magnetic core (i.e., Fe₃O₄ or CoFe₂O₄) and a FE shell (i.e., BaTiOs or (Pb,Zr)TiO₃). These multiferroic core-shell nanoparticles should be uniformly dispersed in a carrier liquid with a surfactant enabling a stable suspension. The liquid should be electrically insulating and non-flammable (e.g., silicon oil, benzene, polybutene). The surfactants can be different organic acids and have to be soluble in the carrier liquid.

The method for the preparation of a multiferroic liquid in CN105006329A is based on mixing and shaking of the dried multiferroic core-shell nanoparticles with the surfactant solution in a carrier liquid. However, the procedure does not assure proper and homogeneous dispersion of nanoparticles. Any nanoparticles, and especially magnetic nanoparticles irreversibly agglomerate when they are dried. The nanoparticle processing should be performed in a carrier liquid through all the steps.

The alleged advantage of the liquid in CN1 05006329A with respect to the sole core-shell FM-FE nanoparticles is in lowering the coercivity of the magnetic core by the free motion of the nanoparticles in a carrier liquid. The nanoparticles align with their magnetic moment along the direction of an applied magnetic field. The nanoparticles also align with their electric dipoles along the direction of an applied electric field. Consequently, the nanoparticles form chains under any of the two external fields. The chain length depends on the strength of the external field. The ME multiferroic liquid shows larger ME effect than the solid-state multiferroics. Therefore, they can operate at lower electric fields than the solid-state ME multiferroics. In addition, the multiferroic liquid also exhibits magneto-optic and electro-optic effects. The same properties are typical for any magnetic liquid (magnetorheological, ferrofluid) or electrorheological liquid. In contrast, the main property of any ME material, i.e., the ME effect, was not shown. The claimed ferroic orders, FM and FE, nor the remanent magnetization and polarization were identified in the claimed multiferroic liquid.

All reported "multiferroic" and "ME" fluids exhibit a significantly lower ME coupling coefficient than theoretical predictions for the same liquid systems. The low measured ME coupling coefficient in the "multiferroic/ME" liquids primarily arises from the leakage current, challenges associated with polarizing the multiferroic fluid, and the limited testing conditions [2]. In addition, colloidal instability in the reported systems contributed to false interpretation of the measured magnetic and electric properties.

A decade ago, the first room-temperature ferromagnetic liquid was realized [6]. The material consists of ferrimagnetic nanoplatelets (NPLs) homogeneously dispersed in a nematic liquid-crystalline matrix. The NPLs are based on barium hexaferrite (BHF, with basic chemical composition BaFe₁₂O₁₉) having a high uniaxial magnetocrystalline anisotropy.

The crystals preferentially grow in the ab plane forming thin hexagonal platelets with the magnetic easy axis perpendicular to their basal plane. The BHF NPLs are in single-domain state and each of them is a permanent nanomagnet. The BHF NPLs dispersed in a nematic liquid crystal are FM coupled via the nematic director and exhibit the remanent magnetization and liquid magnetic-domain structure. A combination of the liquid-crystal electrical sensitivity and magnetic sensitivity of the NPLs resulted in the converse ME effect, i.e., the magnetization increased with the increasing strength of the applied electric field [7]. To be precise, the magnetization reoriented with an applied electric field and so increased in one direction but its magnitude remained the same. Moreover, the direct ME effect, i.e., the variation of polarization with an applied magnetic field, was not observed in Ref. [7].

In addition to the liquid-crystalline electro-optic effect, the FM liquid crystals also show a magneto-optic effect [7] that can be exploited for the visualisation of a magnetic field [8] and in photonics [9]. FM liquid crystals also show significant magneto-dielectric and magneto-rheological effects [10].

In summary, no known ME liquid in the prior art provides sensitivity to both magnetic and electric fields resulting in the direct and converse ME effect.

The present invention has been devised in light of the above considerations.

### Summary of the Invention

**In a first aspect,** the present invention provides a magnetoelectric liquid, comprising: a magnetoelectric nanostructure dispersed in a solvent, wherein the magnetoelectric nanostructure comprises a flattened body having a first face, a second face and a magnetic dipole; and the first face of the flattened body is functionalised with a first polar ligand such that the nanostructure has an electric dipole; and wherein the magnetic dipole has a normal magnetic component that is perpendicular to a basal plane of the flattened body; and the electric dipole has a normal electric component that is perpendicular to the basal plane of the flattened body; and wherein in a majority of the magnetoelectric nanostructures in the magnetoelectric liquid, the normal magnetic component and the normal electric component are parallel, or in a majority of the magnetoelectric nanostructures in the magnetoelectric liquid, the normal magnetic component and the normal electric component are antiparallel.

The magnetoelectric liquid is so-called because it is responsive to both applied magnetic and electric fields. It exhibits both the direct and converse ME effects. Manipulation of the electric dipole by a magnetic field is the direct ME effect. Manipulation of the magnetic dipole by an electric field is the converse ME effect. In the magnetoelectric liquid of the present invention there may be no interaction between the nanostructures in the absence of external fields; a magnetization is induced in an applied electric field and polarization is induced in a magnetic field. Herein, the magnetoelectric liquid of the second aspect may be referred to as a "hybrid ME liquid" when the nanostructure comprises an inorganic flattened body and organic polar ligands. Advantageously, the magnetoelectric liquids of the present invention show ME coupling (direct and converse) to a significant degree at moderate (i.e. room) temperatures. At these preferred temperatures, the magnetoelectric liquids of the present invention are particularly sensitive to applied electric and magnetic fields. It may be that the ME liquid exhibits direct and converse ME effects in the temperature range -10°C to 150°C. It may be that the ME liquid exhibits direct and converse ME effects in the temperature range 0°C to 150°C.

It may be that the magnetoelectric nanostructure is homogenously dispersed in the solvent. It is understood that a homogenous dispersion refers to the time average distribution of nanostructures in the liquid and describes their even distribution. "Dispersed" as used herein is considered to be equivalent to "suspended". It may be that the magnetoelectric nanostructures move substantially freely and independently within the liquid (i.e. within the dispersion).

In the magnetoelectric liquid, a majority of the nanostructures have their normal magnetic component and their normal electric component aligned either parallel or antiparallel. That is, the liquid does not feature an even split of parallel and antiparallel aligned normal magnetic components and normal electric components across the population of magnetoelectric nanostructures. That is, there is at least some excess of magnetoelectric nanostructures with either parallel- or antiparallel-aligned normal magnetic and normal electric components. From this feature, the direct and converse ME behaviour is derived. As used herein, "parallel" when describing the relative alignment of two vectors or vector components means that both point in the same direction in space, i.e. this can be schematically represented as ↑↑. As used herein, "antiparallel" when describing the relative alignment of two vectors or vector components means that they point in opposite directions, i.e. this can be schematically represented as ↑↓.

It may be that the solvent is substantially non-conductive. It may be that the solvent is non-conductive. It may be that the solvent is nonpolar.

The magnetoelectric nanostructure of the magnetoelectric liquid is magnetoelectric in that it possesses both a magnetic dipole and an electric dipole. Herein, the magnetoelectric nanostructure may be referred to as a "hybrid ME nanostructure" when the flattened body is inorganic and the polar ligands are organic. The electric dipole results in an electric "polarization". The polarization depicts volume density of electric dipoles in a material. A magnetic dipole results in a magnetization. Magnetization depicts volume density of magnetic moments in a material. As used herein, reference to magnetic dipoles and electric dipoles is understood to be a reference to spatially and temporally averaged dipoles, and not to an instantaneous dipole; in this way they may be described as permanent dipoles. It may be that the flattened body comprises a ferromagnetic material. It may be that the flattened body comprises a ferrimagnetic material. It may be that the flattened body, and therefore the nanostructure more generally, comprises a uniaxial magnetic anisotropy.

The magnetoelectric nanostructure is flattened. It may be that the nanostructure is substantially planar or substantially 2D. As used herein, "2D" is understood to not refer to a system with a null third dimension, but instead a chemical / physical system that is planar / flattened (i.e. with a high aspect ratio, and a finite thickness). In such "2D" systems it may be that their chemical or physical nature is affected to some degree by their flat geometry. The nanostructure may be a platelet or may be a 2D assembly of nanoparticles. It may be that the 2D assembly of nanoparticles is a flattened structure comprising a single layer of nanoparticles. The flattened nanostructure has an oblate-type symmetry and thus can be defined by a basal (or lateral) plane that is between a first and a second face of the nanostructure. As used herein "basal plane" refers to a horizontal or lateral plane, and thus is one which cuts through the nanostructure such that the first face is entirely to one side of the plane, and the second face is entirely to the other. It may be that the first and second faces are substantially parallel. It may be that the first and second faces are parallel.

The magnetic dipole, more specifically a vector representing the magnetic dipole, has a component that is perpendicular to the basal plane (i.e. the vector has a non-zero projection onto an axis that is perpendicular to the basal plane) - this is the normal magnetic component. It may be that this component is substantially the same magnitude as the vector itself, that is it may be that the magnetic dipole (and the vector representing it) is substantially perpendicular to the basal plane. It may be that the magnetic dipole is perpendicular to the basal plane.

It is understood that the basal plane in such embodiments is the same basal plane when discussed with reference to the electric or the magnetic dipole, since the same flattened body is present.

The electric dipole, more specifically a vector representing the electric dipole, has a component that is perpendicular to the basal plane (i.e. the vector has a non-zero projection onto an axis that is perpendicular to the basal plane) - this is the normal electric component. It may be that this component is substantially the same magnitude as the vector itself, that is it may be that the electric dipole (and the vector representing it) is substantially perpendicular to the basal plane. It may be that the electric dipole is perpendicular to the basal plane.

The first face of the flattened body is functionalised with a (first) polar ligand. As used herein "functionalised" refers to the fact the polar ligand is bonded to or bound to the flattened body, chemically or physically. It may be that the second face is unfunctionalized (i.e. bare), and does not have a (second) polar ligand bound to it.

It may be that the polar ligand comprises an electron withdrawing group. It may be that the polar ligand comprises an electron donating group. It may be that the polar ligand comprises a polar moiety. It is understood that a moiety featuring an uneven distribution of electron density can result in an electric dipole and can contribute to an overall electric dipole in the nanostructure. It may be that the first face of the flattened body comprises a plurality of polar ligands, each contributing to the overall electric dipole associated with the nanostructure. Reference to being functionalised with a polar ligand encompasses being functionalised with more than one (e.g. a plurality) of polar ligands.

It may be that the first polar ligands are attached to the first face of the flattened body with a specific surface density. It may be that the surface density of first polar ligand on the face of the flattened body is 0.1-10 ligands/nm². It may be that the surface density of first polar ligand on the face of the flattened body is 0.1-5 ligands/nm². It may be that the surface density of first polar ligand on the face of the flattened body is 0.1-3 ligands/nm². It may be that the surface density of first polar ligand on the face of the flattened body is 0.4-3 ligands/nm². It may be that the surface density of first polar ligand on the face of the flattened body is 0.4-2 ligands/nm². It may be that the surface density of first polar ligand on the face of the flattened body is approximately 1 ligands/nm². This surface density may refer to the discrete / exact number of ligands on a given face of a given nanostructure, or may be an average value for a population of nanostructures.

It may be that the magnetic dipole of the flattened body has a magnitude of 10⁻¹⁹ to 10⁻¹⁷ Am². It may be that the electric dipole of the nanostructure has a magnitude of 10⁻²⁶ to 10⁻²⁴ As m. Given the size of the magnetic and electric dipoles, the required magnetic and electric fields required to interact with the ME liquids can be estimated using *pₘB* > *kT* and *pE* > kT where pₘ and p are the magnetic dipole and electric dipole, respectively, B and E refer to the applied external magnetic and electric fields, respectively, k is the Boltzmann constant and T is the absolute temperature. In line with this, the sensitivity of the ME liquid can be estimated with reference to the external B and E fields required to interact with the ME liquid: B > 0.4 - 40 mT and E > 4000 - 400000 V/m.

The magnetoelectric liquid of the present invention can be manipulated by applying a magnetic field to a sample of the liquid; or applying an electric field to a sample of the liquid.

It may be that manipulating the magnetoelectric liquid comprises applying a magnetic field to a sample of the liquid. It may be that manipulating the magnetoelectric liquid comprises applying an electric field to a sample of the liquid. It may be that manipulating the liquid comprises applying both an electric field and a magnetic field to a sample of the liquid simultaneously.

It may be that manipulating the magnetoelectric liquid comprises applying a magnetic field in the range 0.1-1 mT. It may be that manipulating the magnetoelectric liquid comprises applying an electric field in the range 0.1-1 MV/m. Advantageously, the magnetoelectric liquid of the present invention is highly sensitive to both applied magnetic and electric fields. It may be that manipulating the magnetoelectric liquid comprises applying a magnetic field in the range 0.1-1 mT and an electric field in the range 0.1-1MV/m simultaneously.

**In some embodiments** of the magnetoelectric liquid, the volume % of magnetoelectric nanostructures with their normal magnetic component parallel to their normal electric component is at least twice the volume % of magnetoelectric nanostructures with their normal magnetic component antiparallel to their normal electric component; or the volume % of magnetoelectric nanostructures with their normal magnetic component antiparallel to their normal electric component is at least twice the volume % of magnetoelectric nanostructures with their normal magnetic component parallel to their normal electric component.

**In some embodiments** of the magnetoelectric liquid, the normal magnetic component and the normal electric component are parallel in substantially all magnetoelectric nanostructures; or the normal magnetic component and the normal electric component are antiparallel in substantially all magnetoelectric nanostructures.

It may be that the normal magnetic component and the normal electric component are parallel in all magnetoelectric nanostructures; or the normal magnetic component and the normal electric component are antiparallel in substantially all magnetoelectric nanostructures.

**In some embodiments** the flattened body has a diameter in the range 20-300nm.

It may be that the flattened body has a diameter in the range 20-150nm. It may be that the flattened body has a diameter of approximately 50nm. The diameter generally describes a basal / lateral dimension of the flattened body. It may be that the diameter describes the largest basal / lateral dimension of the flattened body.

It may be that the flattened body has a thickness of 1-30nm. It may be that the flattened body has a thickness of 1-20nm. It may be that the flattened body has a thickness of 1-10nm. It may be that the flattened body has a thickness of 3-5nm. It may be that the thickness describes an axial dimension of the flattened body. It may be that the thickness describes the largest axial dimension of the flattened body.

The dimensions here may be used to describe a distribution of a dimension over a population of nanostructures, or may describe an individual nanostructure, or may describe the average dimension of a population of nanostructures. Most commonly the dimension may be reported as a d₅₀ value. It may be that the dimensions of the flattened body is measured using transmission electron microscopy (TEM).

**In some embodiments** the flattened body comprises a metal or a metal oxide; or the flattened body comprises a barium hexaferrite.

It may be that the metal (in the metal and the metal oxide) is barium (Ba). It may be that the metal (in the metal and the metal oxide) is iron (Fe). It may be that the flattened body, that comprises a metal or a metal oxide, comprises more than one metal. It may be that the flattened body, that comprises a metal or a metal oxide, comprises barium and iron.

It may be that the flattened body comprises a hexaferrite. It may be that the flattened body comprises a hexaferrite from the M-Fe-Me-O system, where M is a large metal, and Me is a small metal, that is different to M and Fe and the stoichiometry of each component is not particularly limited. It may be that Me is a trivalent or divalent metal or a combination of a divalent and tetravalent metals. It may be that M is Ba. It may be that M is a large divalent cation. It may be that M is Sr²⁺. It may be that M is Pb²⁺.

It may be that the flattened body comprises BaFe₁₂O₁₉. It may be that an amount of the Fe in BaFe₁₂O₁₉ is substituted with Sc. That is, it may be that the flattened body comprises BaFe₁₂₋ₓScₓO₁₉. It may be that x is in the range 0-1, it may be that x is in the range 0-0.5.

**In some embodiments** the second face of the flattened body is functionalised with a second polar ligand; such that the second polar ligand increases the magnitude of the electric dipole.

It may be that the second polar ligand contributes to (i.e. reinforces) the existing electric dipole, such that the resultant electric dipole is directed in the same, substantially the same, or a similar direction to that of the first polar ligand. It may be that the electric dipole created by the second polar ligand is parallel to the electric dipole created by the first polar ligand. Given the symmetry of the flattened body, in order for the electric dipoles of the first and second polar ligands to be parallel, or substantially parallel, when they are both attached to the first and second faces of the flattened body, respectively, the polarization of the first and second polar ligands must be antiparallel when compared side-by-side with the ligands in the same orientation (e.g. both with anchor sides down).

The provision of a second polar ligand increases the overall magnitude of the electric dipole exhibited by the magnetoelectric nanostructure. This increases the sensitivity of the nanostructure to external, applied electric fields.

Description provided herein in relation to the first polar ligand can be applied to the second polar ligand, unless context demands otherwise.

**In some embodiments** the first polar ligand comprises an anchor, for binding to the first face of the flattened body; and a polar moiety.

In such embodiments, the first polar ligand is attached (i.e. bound) to the first face of the flattened body through the anchor. Attachment or binding may be through chemical or physical interactions (for example, chemical bonds or electrostatic interaction, respectively). It may be that the anchor is selected from the group consisting of: a phosphonic acid, a sulfonic acid, an alkoxysilane, an alkyl- and silyl phosphonate, a carboxylic acid, and a catechol group.

The polar moiety is responsible for, or contributes to, the polarity of the first polar ligand. It may be that that the polar moiety comprises a polarisation (i.e. an electric dipole). The polar moiety may be an electron withdrawing group, or it may be an electron donating group, or a structure containing electron withdrawing group and electron donating group connected through a structural element enabling electron transfer between the electron withdrawing group and electron donating group (described herein as a "push-pull" system). It may be that the polar moiety is a group capable of inducing polarisation, even if it is not polar *per se*.

It may be that the polar ligand is organic. The polar moiety may comprise an aryl or a heteroaryl ring. It may be that the polar moiety comprises an aryl or a heteroaryl ring substituted with an electron donating group or an electron withdrawing group. It may be that the polar moiety comprises an aryl or a heteroaryl substituted with both an electron withdrawing group and an electron donating group. It may be that the electron withdrawing group is selected from the group consisting of NO₂, CN, SF₅, CHO, and SO₂R¹, wherein R¹ is CₘH₂ₘ₊₁, CₘH₂ₘ₋₁ or CₘH₂ₘ₋₃. It may be that one or more (including all) hydrogen atoms of the R¹ chain are replaced by fluorine atoms. It may be that the electron withdrawing group consists of SO₂(CH₂)ₘX, wherein X represents an anchor. It may be that the electron donating group is selected from the group consisting of OR¹, and NR¹R², wherein R¹ is as described in relation to the electron withdrawing group, and R² is as described for R¹ in relation to the electron withdrawing group or H. It may be that the electron donating group is selected from the group consisting of O(CH₂)ₘX, and NH(CH₂)ₘX, wherein X represents an anchor. In the definitions of R¹ and R² m may be 0-25. It may be that m is 0-20. It may be that m is 5-20. It may be that m is 10-20. It may be that m is 15-20. It may be that m is 10-25. It may be that m is 15-25. It may be that m is 20-25. It may be that m is 5-10. It may be that m is 5-15.

It may be that the polar moiety is selected from the group consisting of: 4-(alkylsulfonyl)aniline, 4-(alkenylsulfonyl)aniline, 4-(alkylsulfonyl)phenol, 4-(alkenylsulfonyl)phenol, 4-nitroaniline, 4-nitrophenol, 4-aminobenzonitrile, 4-hydroxybenzonitrile, 4-(pentafluoro-λ⁶-sulfaneyl)aniline, 4-(pentafluoro-λ⁶-sulfaneyl)phenol, 4-aminobenzaldehyde and 4-hydroxybenzaldehyde. It may be that the polar moiety is some highly polar moiety, for example, fluorophenyl, 2-(4-aminobenzylidene)malononitrile, 5-nitrothiophen-2-amine, 2-((5-aminothiophen-2-yl)methylene)malononitrile, 5'-nitro-[2,2'-bithiophen]-5-amine or 2-((5'-amino-[2,2'-bithiophen]-5-yl)methylene)malononitrile.

**In some embodiments** the second polar ligand comprises an anchor, for binding to the second face of the flattened body; and a polar moiety.

The comments and features above regarding the polar moiety and anchor of the first polar ligand apply equally to the anchor and the polar moiety of the second polar ligand. It will be apparent that the two can be chosen independently.

It may be that the first and/or second polar ligands comprise a linker connecting their respective anchors to their respective polar moieties.

It may be that the linker is chosen to affect the overall hydrophilicity/hydrophobicity of the polar ligand. It may be that the linker is an optionally substituted alkyl chain. It may be that the linker is an optionally substituted alkenyl chain. It may be that the linker is an optionally substituted alkynyl chain.

It may be that the linker is a C₁-C₂₀ optionally substituted alkyl chain. It may be that the linker is a C₁-C₂₀ optionally substituted alkenyl chain. It may be that the linker is a C₁-C₂₀ optionally substituted alkynyl chain. It may be that the optionally substituted alkyl, alkenyl or alkynyl chain is a C₁₋C₁₂ chain. It may be that the optionally substituted alkyl, alkenyl or alkynyl chain is a C₄₋C₈ chain.

It may be that the linker comprises an optionally substituted cycloalkyl, or an optionally substituted heterocycle, in isolation or in addition to the optionally substituted alkyl, alkenyl or alkynyl groups described above.

It may be that the linker comprises a heteroatom within the backbone of the linker chain, that is the optionally substituted alkyl, alkenyl and alkynyl linker groups may be optionally substituted heteroalkyl, heteroalkenyl or heteroalkynyl groups, respectively. The heteroatom may be selected from the group consisting of N, O and S.

It may be that the first and/or second polar ligand comprises an end group. It may be that the end group is chosen to ensure colloidal stability of the magnetoelectric nanostructure when it is dispersed in a liquid, for example a non-polar solvent; this may be achieved by the end group providing electrical insultation or steric hindrance between nanostructures.

It may be that the end group is composed of the substituents that may be present on the electron withdrawing groups and electron donating groups described above. It may be that the end group is an optionally substituted alkyl, alkenyl, alkynyl, cycloalkyl or aryl.

It may be that the first and/or second polar ligands have the structure Anchor - Linker - Polar moiety - End group (A-L-P-E). It may be that the structure of the polar ligand is optimised to provide the maximum total electric dipole per nanostructure, which ensures high sensitivity to an applied, external electric field, whilst also ensuring colloidal stability.

Achieving high sensitivity to an applied, external electric field can also be aided by optimising the distribution of polar ligands on the first and second faces. For example, it may be that providing an optimal surface density results in the largest electric dipole overall.

**In** some embodiments the first and/or second polar ligands are according to one of the following formulae: 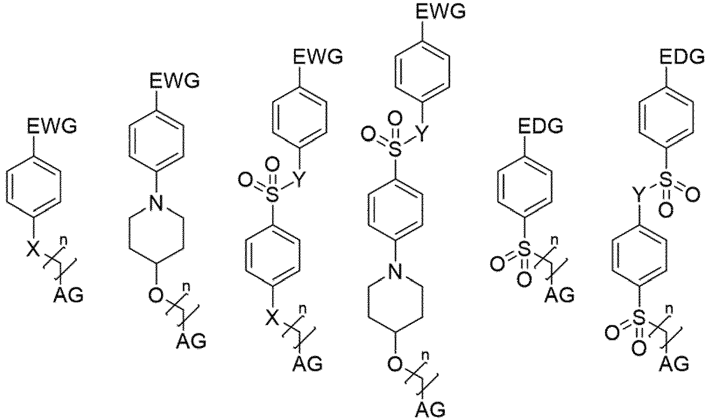 wherein EWG is an electron withdrawing group, EDG is an electron donating group, AG is an anchor, X is O or NH, Y is O or NH, and n is 1-12.

It may be that EWG = NO₂, CN, SF₅, CHO, SO₂R¹; EDG = OR¹, NR¹R²; and AG = PO₃H₂, PO(OCH₂CH₃)₂, PO(OSi(CH₃)₃)₂, Si(OCH₂CH₃)₃.
R¹ = CₘH₂ₘ₊₁, CₘH₂ₘ₋₁; R² = H, CₘH₂ₘ₊₁; m = 0-25.

It may be that one to all hydrogen atoms of the R¹ chain are replaced by fluorine atoms.

The anchor group is able to anchor to a surface of the flattened body, by interaction between the anchor and surface groups of the flattened body (for example OH), The interactions can be physical (e.g., hydrogen bond, electrostatic), coordinative or covalent (as a result of the condensation reaction).

It may be that the first polar ligand is selected from the following compounds:

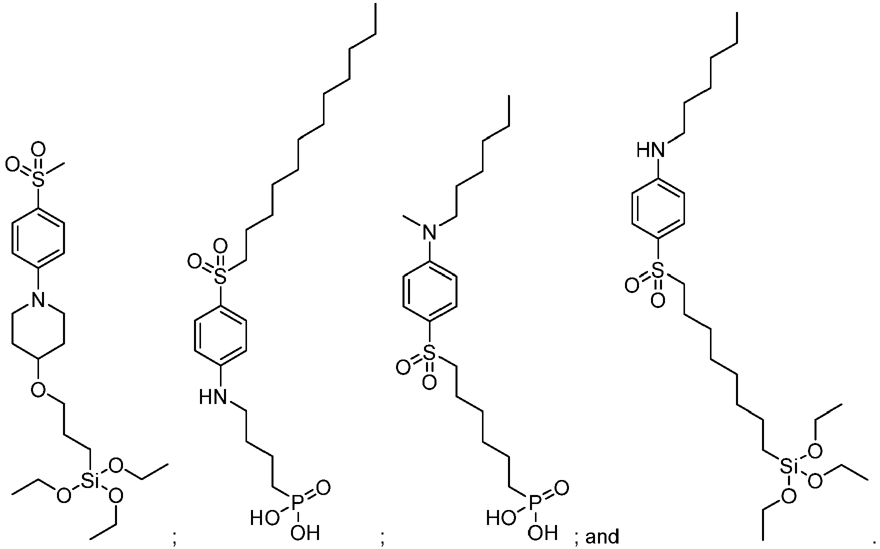

It may be that the second polar ligand is also selected from the above compounds, so long as the second polar ligand increases the magnitude of the electric dipole of the nanostructure already present due to the first polar ligand.

**In some embodiments** the solvent is a non-polar solvent.

It may be that the solvent is selected from the group consisting of chloroform, toluene, chlorobenzenes, benzyl alcohols, limonene, xylenes, silicon oil, fluorous solvents, anisole, dibutyl ether, 1,2-dimethoxyethane and diglyme. It may be that the solvent is selected from the group consisting of chloroform, toluene, chlorobenzene, limonene, xylene, anisole, dibutyl ether, 1,2-dimethoxyethane and diglyme. It may be that the nonpolar solvent is a chlorobenzene, for example 1,2-dichlorobenzene. It may be that the solvent is chloroform. It may be that the nonpolar solvent is toluene. It may be that the dielectric constant of the solvent is 0-50. It may be that the dielectric constant if 0-25. It may be that the dielectric constant of the solvent is 0-13.5.

**In some embodiments** the magnetoelectric liquid comprises non-polar molecules which stabilise the dispersion of magnetoelectric nanostructures by forming a coating around the magnetoelectric nanostructure.

The role of nonpolar coating of nonpolar molecules is to help colloidally stabilise the dispersion of magnetoelectric nanostructures in the solvent (i.e. a carrier liquid). The nonpolar coating may achieve this through steric forces that act to minimize the attractive magnetic-dipole forces. It may be that the coating is electrically insulating.

It may be that the nonpolar coating comprises one or more of: unsaturated fatty acids (i.e., oleic or ricinoleic acid), macromolecular (or polymer) brushes, thick polymer coatings, and hydrophobic silanes. It may be that the nonpolar coating comprises a hydrophobic silane, for example heptadecafluoro-1,1,2,2-tetrahydrodecyl)triethoxysilane or octadecyl silane or Dimemethyloctadecyl[3-(trimethoxysilyl)propyl]ammonium chloride. It may be that the non-polar coating forms a complete coating around the magnetoelectric nanostructure.

It may be that the magnetoelectric liquid a volume concentration of magnetoelectric nanostructure is less than or equal to 10%.

It may be that the liquid is described as a colloid. It may be that the volume concentration of magnetoelectric nanostructures is such that a multiferroic liquid is not formed. It may be that the volume concentration is such that the magnetoelectric liquid shows no permanent electric or magnetic dipole. That is, it may be that the ME liquid is a paraelectric and a paramagnetic. It may be that above 10% a multiferroic liquid forms, that is it may be that below 10% the magnetoelectric liquid shows no permanent electric or magnetic dipole.

**In a second aspect** the present invention provides a method of preparing a magnetoelectric liquid, comprising: forming a magnetoelectric nanostructure by assembling a flattened body having a first face, a second face and a magnetic dipole at a phase boundary and selectively functionalising the first face of the flattened body with a first polar ligand that gives the nanostructure an electric dipole, wherein: the phase boundary is substantially flat and assembling the flattened body is carried out under an external magnetic field, or the phase boundary is curved and formed in an emulsion, and the method further comprises a subsequent separation step which is carried out under simultaneous external magnetic and external electric fields; and dispersing the magnetoelectric nanostructure in a solvent.

Herein, such a method of preparation may be referred to as surface-selective hybridization (SSH). The selective functionalisation is advantageously only carried out on the first face, as only the first face is available in the phase containing the first polar ligand.

It may be that the method of preparation is for preparing a magnetoelectric liquid according to the first aspect of the present invention.

When the phase boundary is substantially flat and assembling the flattened body is carried out under an external magnetic field, the magnetic field is used to enforce a uniform magnetic dipole orientation across the flattened bodies (nanostructures) assembled at the phase boundary. In this embodiment, the magnetic field applied during assembly at the flat phase boundary is the source of the population bias in the magnetoelectric liquid of the first aspect, where there is a majority of either parallel- or antiparallel-oriented normal magnetic and normal electric components.

It may be that the phase boundary is liquid-liquid. It may be that the phase boundary is solid-liquid. It may be that the phase boundary is liquid-gas. The phase boundary is created where two immiscible phases meet.

It may be that the phase boundary is substantially flat. It may be that the substantially flat phase boundary is flat (i.e. planar) on the cm scale and larger. It may be that the flat phase boundary is formed at the boundary between two bulk phases. Advantageously, the flat phase boundary allows the flattened bodies of the nanostructures to be uniformly aligned with an applied external magnetic field, meaning they do not need to be sorted or separated after functionalisation. It may be that the phase boundary is solid - liquid. It may be that the flattened body of the nanostructure is immobilised on a solid phase, which forms one part of a solid-liquid phase boundary during functionalisation.

It may be that the phase boundary is curved. It may be that the phase boundary is formed in an emulsion. It may be that the curved phase boundary is formed when solid particles, such as flattened magnetic nanostructures, stabilize an emulsion. Advantageously the curved surface formed in an emulsion allows for a high surface area of phase boundary, and high yields of functionalisation. When a curved phase boundary is used, a subsequent step of separation is carried out by applying a magnetic and electric field simultaneously, to sort the nanostructures according to their magnetic dipole orientation. In such embodiments, this separation step is the source of the population bias in the magnetoelectric liquid of the first aspect, where there is a majority of either parallel- or antiparallel-oriented normal magnetic and normal electric components. It may be that the electric and magnetic fields are parallel in one location, and antiparallel in another so that the two species of nanoplatelets (one with parallel normal magnetic and electric components, and one with antiparallel normal magnetic and electric components) get spatially separated. It may be that the curved phase boundary is formed by solid particles suspended in liquid, and so the emulsion may be described as a colloid.

When the phase boundary is flat, it may be that the method comprises the step of deposition of the flattened body of the nanostructure to a solid surface, for example a glass slide. It may be that the solid surface is activated by plasma to allow deposition. It may be that the glass slide is coated with a sacrificial layer. It may be that the sacrificial layer is polystyrene. It may be that the sacrificial layer is polyvinyl alcohol. It may be that the sacrificial layer are self-assembled polyelectrolytes. It may be that deposition is from an aqueous dispersion, the aqueous dispersion may have an acidic pH. It may be that the deposition is from a dispersion in a nonpolar solvent. The deposition is under a static magnetic field, it may be that this magnetic field is 50-100mT, it may be that the magnetic field is about 80 mT. It may be that during functionalisation the polar ligand is added drop-wise. It may be that the concentration of ligand is adjusted to achieve a desired surface density of polar ligand. It may be that the concentration is such that it will achieve approximately 1 ligands/nm² of the polar ligand on the first face of the flattened body of the nanostructure.

When the method of preparation involves the use of a curved surface in an emulsion, it may be that the emulsion is a Pickering emulsion system. It may be that the flattened bodies of the nanostructure are immobilised on to solid particles. It may be that the solid particles are formed from paraffin wax. It may be that the solid particles are formed from amorphous silica. It may be that the solid particles are formed from polystyrene. It may be that the flattened body coated solid particles are resuspended and the first polar ligand is added drop wise. It may be that the first polar ligand is added to achieve a concentration that achieves approximately 1 ligands/nm² of the first face of the flattened body.

**In some embodiments** the method of preparing a magnetoelectric liquid further comprises: functionalising the second face of the flattened body with a second polar ligand, such that the magnitude of the electric dipole is increased.

It may be that the step of functionalising the second face of the flattened body with a second polar ligand does not require functionalisation at a phase boundary, the only bare face remaining open to functionalisation is the second face of the flattened body. It may be that the second polar ligand results in a reinforcement of the electric dipole that results from the first polar ligands (i.e. the first and second polar ligands are parallel once functionalising the first and second surfaces of the flattened body, but might be described as antiparallel when compared in the same orientation with respect to the anchor).

**In some embodiments** the method of preparing a magnetoelectric liquid further comprises: a hydrophobization step wherein the magnetoelectric nanostructure is coated in a non-polar molecule.

The purpose of the hydrophobization step is to colloidally stabilise the magnetoelectric nanostructures in the magnetoelectric liquid.

**In** a **third aspect** the present invention provides a magnetoelectric nanostructure that is the magnetoelectric nanostructure defined in the first aspect.

The invention includes the combination of the aspects and preferred features described except where such a combination is clearly impermissible or expressly avoided.

### Summary of the Figures

Embodiments and experiments illustrating the principles of the invention will now be discussed with reference to the accompanying figures in which:
**Fig. 1** illustrates a schematic representation of the hybrid ME liquids and their behaviours. There is no interaction between the ME-NPLs 1 in an isotropic hybrid ME liquid in the absence of external fields. The magnetization (M) is induced under an applied electric field (E), i.e., the ME effect, and vice-versa, the electric polarization (P) is induced under an applied magnetic field (B), i.e., the converse ME effect;
**Fig. 2** illustrates a schematic representation of the hybrid ME liquids and their behaviours. The multiferroic liquid shows spontaneous polarization (Pₛ) and magnetization (Mₛ) without any applied external field;
**Fig. 3** illustrates the SSH hybridization for the production of ME nanostructures 1, such as ME nanoplatelets (ME-NPLs). The hybridization of only one side of a magnetic NPL 2 with polar ligands 3 will provide for orientation of the electric (pₑ) dipole while the ME-NPLs with parallel and antiparallel magnetic (pₘ) dipoles will be separated under applied external fields.
**Fig. 4** illustrates possible molecular structures of polar ligands; examples are presented. The polar moiety is marked with normal dashed line, the anchor is marked with bold dashed line, the left ligand has chemical formula C₂₁H₃₇NO₆SSi and molecular weight = 459.67, the right ligand has chemical formula C₂₂H₄₀NO₅PS and molecular weight = 461.60;
**Fig. 5** illustrates possible polar ligands; examples are presented. The polar moiety is marked with normal dashed line, the anchor is marked with bold dashed line, the left ligand has chemical composition C₁₉H₃₄NO₅PS and molecular weight = 419.52, the right ligand has chemical composition C₂₆H₄₉NO₅SSi and molecular weight = 515.83;
**Fig. 6** illustrates a schematic representation of the SSH technology at a flat interface. By applying a magnetic field (B), the magnetic dipoles (pₘ) are simultaneously aligned with respect to the electric dipoles (pₑ) during the hybridization. ME-NPL 1 is an example of a ME nanostructure 1;
**Fig. 7** illustrates a schematic representation of the SSH technology in emulsions or suspensions. The ME NPLs 1 with the oppositely aligned magnetic dipoles (pₘ) are separated by applying the magnetic (B) and electric (E) field simultaneously. ME-NPL 1 is an example of a ME nanostructure 1.
**Fig. 8** illustrates a schematic representation of an exemplary ME nanostructure 1, i.e., ME nanoplatelet (ME-NPL) with selectively hybridized surfaces using the two types of polar ligands with the antiparallel electrical dipole alignment.
**Fig. 9** illustrates a schematic representation of an exemplary ME nanostructure 1, i.e., ME nanoplatelet (ME-NPL), with an insulating surface layer 5 (formed from nonpolar hydrophobic molecules enabling their dispersion in nonpolar solvents.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

### Hybrid ME Liquid

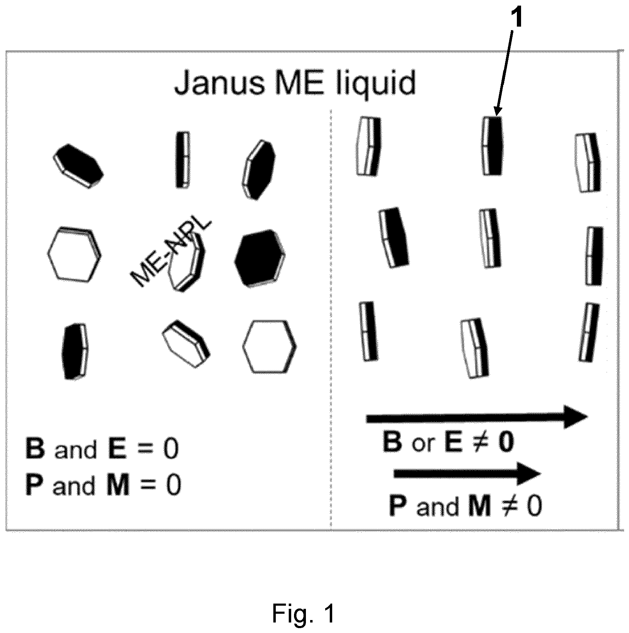

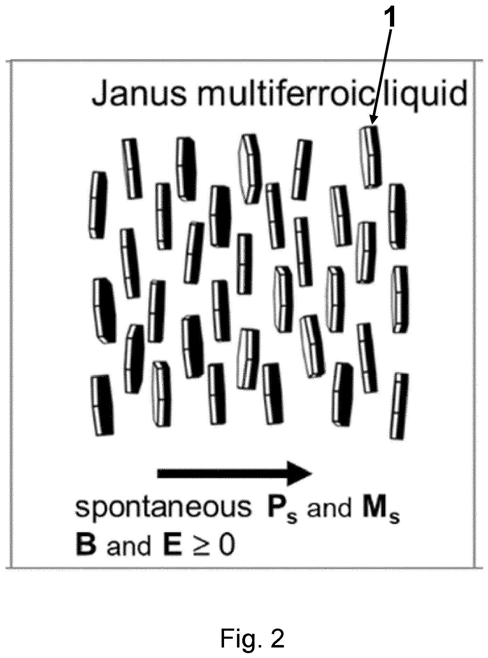

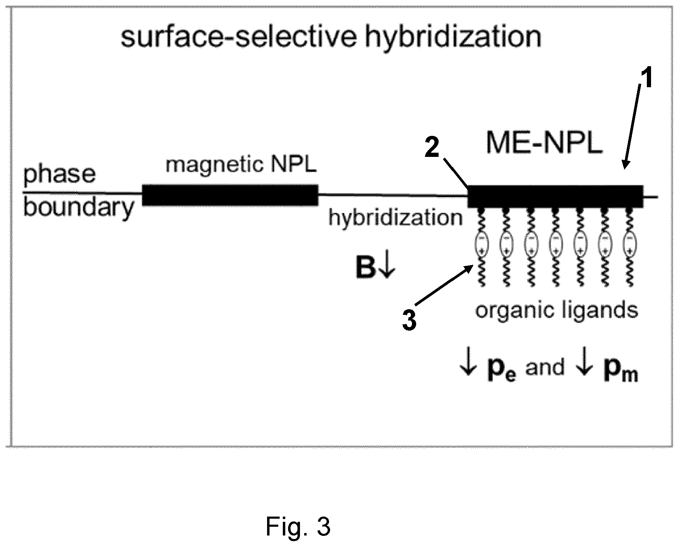

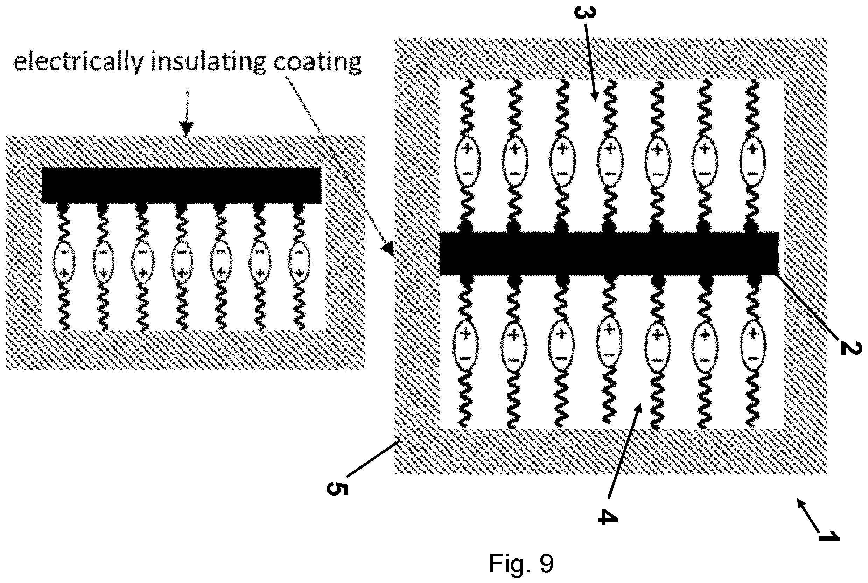

Here the inventors present a novel ME liquid (Fig. 1, Fig. 2 and Fig. 3). It is composed of homogeneously dispersed ME nanostructures 1 coated with a hydrophobic layer (Fig. 9) and dispersed in a nonpolar insulating carrier liquid (i.e. solvent). The ME nanostructures are flattened magnetic nanostructures 2 (e.g., nanoplatelets based on hexaferrites) hybridized (i.e. functionalised) with highly electrically polar organic ligands 3 only on one face forming a hybrid ME Janus nanostructure (Fig. 1, Fig. 2 and Fig. 3). The hybrid ME Janus nanostructures can be prepared with a surface-selective hybridization (SSH) technology by assembling the magnetic nanostructures at a phase boundary, e.g., solid-liquid, liquid-liquid or air-liquid (Fig. 3). The assembled flattened magnetic nanostructures 1 have only one face available for the hybridization with polar ligands 3. The polar ligands are assembled with their electric dipole moments aligned perpendicular to the nanostructures basal plane, all in the same direction, forming a hybrid Janus nanostructure, i.e, a ME nanostructure. The total electric dipole per ME nanostructure is roughly a sum of individual dipoles. The magnetic dipole is aligned perpendicular to the nanostructure basal plane and is parallel or antiparallel to the electric dipole. The ME nanostructures dispersed in a liquid align in the direction of an external field (i.e., magnetic or electric) and, in this way, the hybrid ME liquid shows direct and converse ME effect, meaning that the polarization can be controlled with a magnetic field and the magnetization can be controlled with an electric field. The hybrid ME liquid with a low fraction of ME hybrids behaves as a paraelectric and paramagnetic, i.e., it does not show spontaneous polarization nor spontaneous magnetization, respectively. However, it shows the ME effect once any of the two external fields is applied. At volume concentrations of the ME hybrid nanostructures exceeding 10 %, a multiferroic liquid may be formed. The multiferroic liquid is distinguished from the ME liquid by a spontaneous polarization and spontaneous magnetization in the absence of any external field.

The hybrid ME liquid is the first true ME liquid; a homogeneous and stable colloid with coupled magnetic and electric properties. Namely, the previously reported "ME and multiferroic" liquids are not stable colloids but mixtures of FE and FM nanoparticles or core-shell FM-FE nanoparticles in a carrier liquid. The hybrid ME liquid of the present invention will require significantly lower magnetic field (0.1-1 mT, almost as low as Earth's magnetic field) and electric field (0.1-1 MV/m, similar to the electric field in liquid-crystalline displays) for manipulating its properties than the known solid-state ME materials (1-10 T and 1-100 MV/m, respectively). The hybrid ME liquid will also show ME-optical, ME-mechanical and ME-rheological responses, in addition to the possibility for shape adjustment to specific applications. In line with this, technologies using low energy consumption, wireless signal transmission, contactless operation and miniaturization can be developed from the hybrid ME liquids.

The main areas of significance for the realisation of the hybrid ME liquid of the present invention are related to: (i) the magnetic and structural properties of flattened body 2 of the nanostructures; (ii) the electric and chemical properties of the polar ligands 3, 4; (iii) the electric and chemical properties of the carrier liquid; and (iv) the colloidal stability of the system.

The magnetic nanostructure 1 is substantially planar and has uniaxial anisotropy with the magnetic dipole aligned perpendicular to the basal plane allowing their manipulation with the magnetic field. At the same time, their size is suitably optimized to ensure the optimal total magnetic moment, i.e., large enough, to ensure magnetic sensitivity to weak magnetic fields, but not too large, so as to be able to control the attractive magnetic-dipole interaction and prevent agglomeration of the nanostructures. As an example, the inventors used barium hexaferrite-based nanoplatelets 2 (BHF NPLs). However, any other magnetic NPLs or (quasi) 2D assemblies of magnetic nanoparticles fulfilling the required magnetic properties would be suitable.

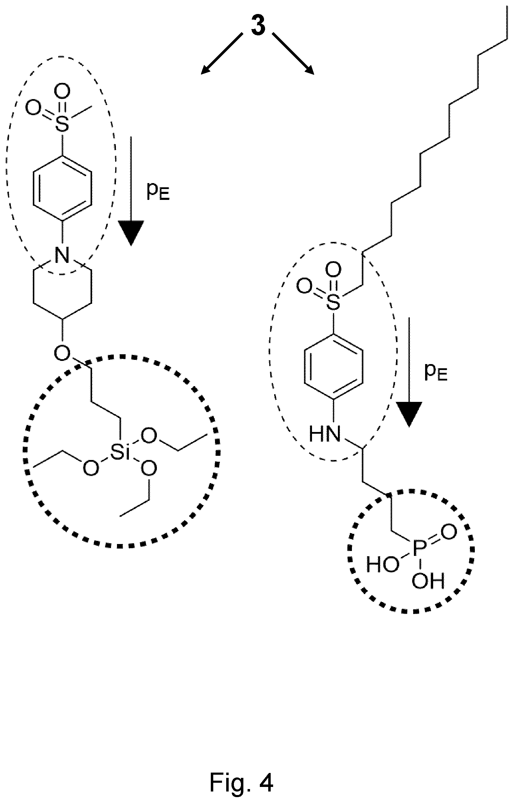

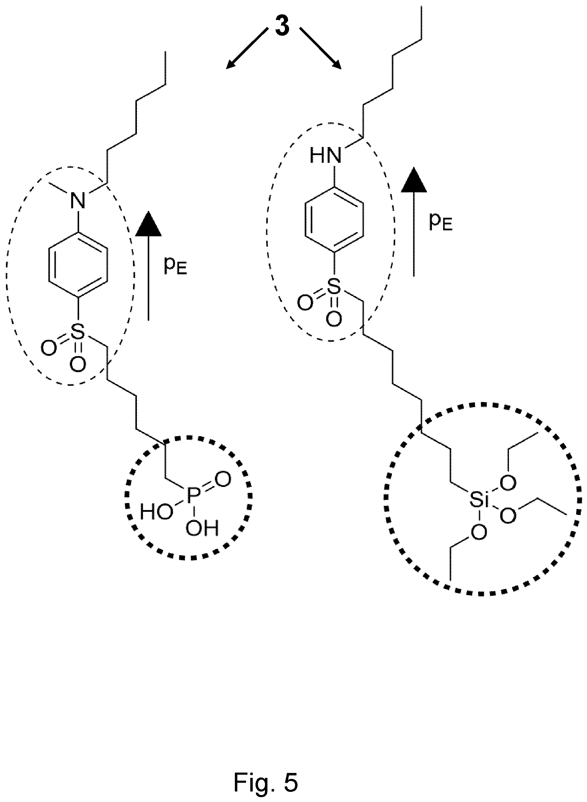

The polar ligands comprise (see examples in Fig. 4 and Fig. 5): (i) an anchor for stable attachment to the surface of magnetic NPLs, (ii) a polar moiety ensuring electrical polarity, (iii) a linker connecting those two moieties and (iv) an end group enabling colloidal stability of the ME nanostructures in a nonpolar liquid and providing electrical insulation. Typical anchors for metal-oxide based magnetic nanostructures are phosphonic acid, sulfonic acid, alkoxysilane, alkyl- and silyl phosphonate, carboxylic acid, or catechol groups. Electrical polarity can be ensured through a push-pull system based on an, e.g., 4-(alkylsulfonyl)aniline, 4-(alkenylsulfonyl)aniline, 4-(alkylsulfonyl)phenol, 4-(alkenylsulfonyl)phenol, 4-nitroaniline, 4-nitrophenol, 4-aminobenzonitrile, 4-hydroxybenzonitrile, 4-(pentafluoro-A6-sulfaneyl)aniline 4-(pentafluoro-A6-sulfaneyl)phenol, 4-aminobenzaldehyde or 4-hydroxybenzaldehyde polar moieties from the exemplary system or other highly polar moieties, e.g., fluorophenyl, 2-(4-aminobenzylidene)malononitrile, 5-nitrothiophen-2-amine, 2-((5-aminothiophen-2-yl)methylene)malononitrile, 5'-nitro-[2,2'-bithiophen]-5-amine or 2-((5'-amino-[2,2'-bithiophen]-5-yl)methylene)malononitrile. The linkers between the anchor and polar moiety can be alkyl chains of varying length which affect the overall hydrophilicity/hydrophobicity of the ligand. The end group can be alkyl, alkenyl or alkynyl chains with additional functional groups and different lengths affecting the ligand solubility and hydrophobicity and/or providing possible subsequent reactions towards hydrophobization. One to all hydrogen atoms of the end group can be replaced by fluorine atoms. Overall, the ligand's 3, 4 structure is optimized to provide the maximum total electric dipole per an individual ME nanostructure to ensure high sensitivity to an electric field. This means the maximum dipole moment per ligand and optimal surface density of the ligands at the nanostructure.

For the electric insulation a nonpolar carrier liquid is useful in which the ME nanostructures 1 can be colloidally stabilized with steric forces acting at a long-enough range to minimize the attractive magnetic-dipole forces. The range of steric forces can be increased by functionalizing the surfaces of the ME nanostructures with large or macro molecules (creating an insulating layer 5) enabling good solvation by the solvent. Examples are: (i) unsaturated fatty acids (i.e., oleic or ricinoleic acid), (ii) salts of unsaturated fatty acids (e.g., oleylamine), (iii) macromolecular (or polymer) brushes, (iv) thick polymer coatings, or (v) hydrophobic silanes (e.g., octadecyl silane, dimemethyloctadecyl[3-(trimethoxysilyl)propyl]ammonium chloride or heptadecafluoro-1,1,2,2-tetrahydrodecyl)triethoxysilane).

### Preparation and Synthesis

Janus particles are particles comprising two sides with distinct properties, such as the proposed hybrid ME nanostructures 1 (Fig. 1, Fig. 2 and Fig. 3) with an electrically polar and an insulating magnetic side. Janus particles are typically produced at an interface at which only one of the sides is exposed for the surface modification (Fig. 3). After harvesting, the particles have one side modified while the masked side keeps the primary properties.

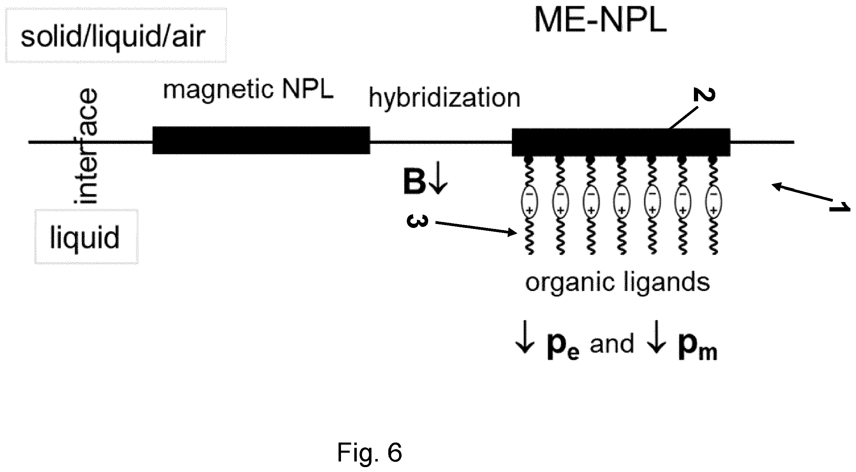

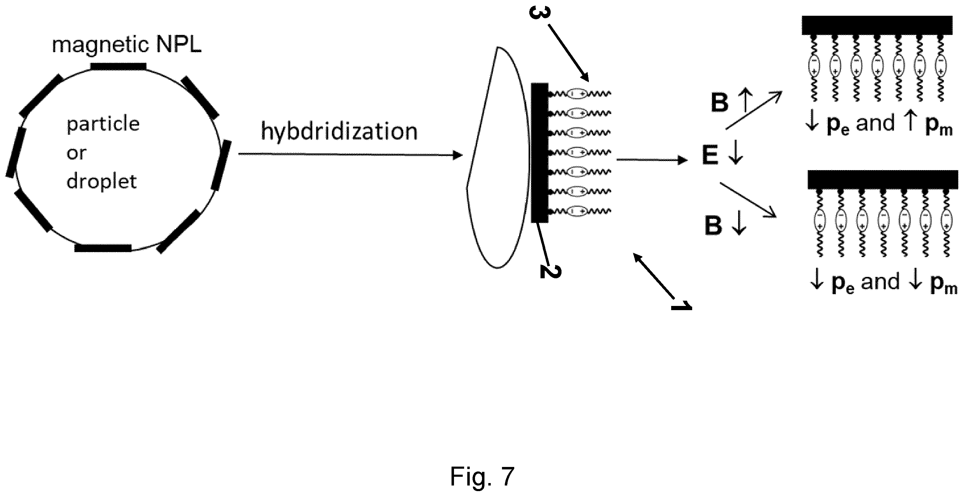

Two different methods of the SSH technology are proposed for the realisation of the hybrid ME liquid: (1) hybridization at a flat solid-liquid, liquid-liquid or air-liquid interface (Fig. 6), and (2) hybridization at a solid-liquid interphase in emulsions or suspensions (Fig. 7). In both methods, the magnetic nanostructures (i.e. flattened bodies) 2 are immobilized at an interface reversibly, physically or chemically, with only one side available for the hybridization. The flattened bodies 2 can be bare or suitably functionalized to enable their colloidal stability during the immobilization and a monolayer assembly at an interface. The hybridized nanostructures, i.e., ME nanostructures 1, are de-immobilized by changing specific physical or chemical properties the system. The method (1) allows magnetic alignment of the magnetic flattened bodies 2 using an applied magnetic field resulting in the ME nanostructures 1 all having the same relative alignment of the magnetic and electric dipoles. The method (2) has higher yields due to higher surface area of the interface but it requires additional separation of the ME nanostructures with the oppositely aligned magnetic dipoles. This is done by simultaneously applying the magnetic and electric field.

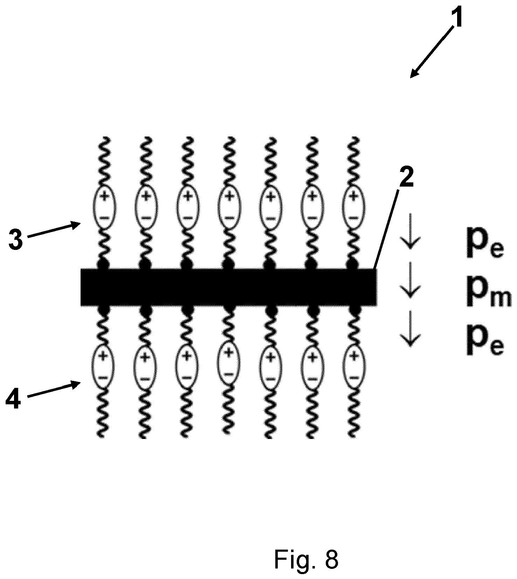

After the de-immobilization, the ME nanostructures 1 are harvested and can be subsequently hybridized on the unhybridized surface with polar ligands 4 having the electrical dipole aligned parallel to the electrical dipoles of the previously attached ligands 3 (Fig. 8). Consequently, the total electric dipole per nanostructure 1 is increased roughly by the sum of the individual dipoles of the additionally attached polar ligands 4.

Finally, the ME nanostructures 1 are coated with an insulating layer 5 of nonpolar molecules (Fig. 9) that also provide for the colloidal stability in a nonpolar solvent. The insulating layer suitably comprises large nonpolar molecules, e.g., fatty acids, phosphonic and sulfonic acids with hydrophobic chains, alkoxysilanes, siloxane layers, polymers or polymer brushes. The nonpolar solvent can be, e.g., chloroform, toluene, chlorobenzenes, benzyl alcohols, limonene, xylenes, silicon oil, fluorous solvents, anisole, dibutyl ether, 1,2-dimethoxyethane or diglyme.

### Summary

The hybrid ME liquid solves the problem of simultaneous sensitivity of a liquid matter to magnetic and electric fields (Fig. 1, Fig. 2 and Fig. 3). The hybrid ME liquid can be manipulated by an external (magnetic of 0.1-1 mT or electric of 0.1-1 MV/m ) field. In particular, they show timely- and concentration-stable direct and converse ME effects. The hybrid ME liquid is suitably composed of hybrid ME Janus nanostructures 1 homogeneously dispersed in an electrically insulating liquid. The ME nanostructures are suitably composed of flattened magnetic nanostructures 2 hybridized with electrically polar ligands 3, 4 (Fig. 4 and Fig. 5) (i) on a first face (Fig. 1, Fig. 2, Fig. 3, Fig. 6 and Fig. 7) or (ii) a first and a second face but with the electric dipoles aligned parallel on the different surface planes (Fig. 8). The ME nanostructures 1 are suitably additionally coated with an insulating layer 5 (Fig. 9) and homogeneously dispersed in an electrically insulating solvent to form a hybrid ME liquid.

### Examples

### EXAMPLE 1

Planar magnetic nanostructures (i.e. flattened bodies) 2, such as BHF NPLs, are deposited from a stable aqueous suspension on a glass slide pre-coated with a sacrificial layer, i.e., solid-liquid interface (Fig. 6). The glass slides are activated by plasma treatment (air, 1 mbar, 10 min). The sacrificial layer of polystyrene (PS) is spin coated on the plasma activated glass slides (1^{st} step: 15 s at 500 rpm, 2^{nd} step: 45 s at 4000 rpm) followed by backing at 80 °C for 2 h. The diameters of BHF NPLs 2 are 20-150 nm and thicknesses of 3-5 nm. They are colloidally stabilized in an aqueous solution of nitric acid at pH = 1.5. For the deposition of NPLs, the pH of suspensions is set to pH = 3 and the concentration is set to 0.4 mg/ml. The PS covered glass substrates are placed on the bottom of a beaker and covered with the suspension of NPLs. The NPLs are deposited on the substrate under a static magnetic field of 80 mT using a FeNdB permanent magnet for 15 min. After the deposition of NPLs, the substrates are immersed in water for 5 minutes and rinsed. The process is repeated twice.

The immobilized NPLs are hybridized using one of the polar ligands 3 from Fig. 4 or one of the polar ligands from Fig. 5, or as described elsewhere herein, e.g., (6-((4-(hexyl(methyl)amino)phenyl)sulfonyl)hexyl)phosphonic acid (Fig. 5), on the exposed side in hexan-1-ol at 80-120 °C under reflux for 3 hours. The hexan-1-ol solution (10 ml) of polar ligand is added dropwise over a time period of 20 minutes. The ligand concentration is adjusted roughly to 3 ligands/nm² of NPLs (such that the surface density achieved on the first face is approximately 1 ligands/nm²). After the functionalization the substrates are soaked in hexan-1-ol for 5 minutes. This washing process is repeated twice.

The hybridized NPLs, i.e., ME NPLs 1, are harvested by dissolving the PS sacrificial layer with 100 ml toluene in an ultrasonic bath at 50 °C for 15 minutes. The substrates are removed and 50 ml of fresh toluene is added to the acquired suspension. The suspension is left for 1 day to allow the dissolution of PS. The next day, the ME NPLs are collected at the bottom of the using a permanent FeNdB magnet. The ME NPLs are washed twice with toluene according to the following procedure. The supernatant is discarded and 150 ml of fresh toluene is poured in the beaker. The beaker is placed in an ultrasonic bath for 15 minutes. After the sonification, the suspension is left for 1 day and the ME NPLs are collected with permanent magnet. After the final washing, the ME NPLs are dispersed in 5 ml toluene.

The ME NPLs are subsequently hydrophobized with (heptadecafluoro-1,1,2,2-tetrahydrodecyl)triethoxysilane (nominal fraction 10 molecules/nm² of NPLs) 5 in 1,2-dichlorobenzene by heating the reaction mixture at 120 °C for 3 h.

### EXAMPLE 2

In Example 2 the ME NPLs 1 are obtained using the same procedure as described in Example 1. The ME NPLs are collected after the final washing and dispersed in hexan-1-ol. Another polar ligand 4 with antiparallel orientation of the electric dipole, e.g., (4-((4-(dodecylsulfonyl)phenyl)amino)butyl)phosphonic acid (Fig. 4) is used for the functionalization of the remaining bare side of the primary ME NPLs. The second polar ligand is dissolved in 10 ml of hexan-1-ol. This solution is added dropwise in the span of 20 minutes to the suspension of the primary ME NPLs in hexan-1-ol (i.e., the suspension obtained as in Example 1 prior to the hydrophobization step). The reaction mixture is heated to 80-120 °C and stirred under reflux for 3 hours. After the end of reaction time, the ME NPLs are centrifuged at 5000 rpm for 5 minutes and washed with hexan-1-ol for three-times. The obtained secondary ME NPLs 1 are dispersed in 1,2-dichlorobenzene and hydrophobized as described in Example 1.

### EXAMPLE 3

Planar magnetic nanostructures (i.e. flattened bodies; BHF NPLs) 2, similar as in the Example 1, are functionalized with citric acid (CA) and dispersed in water. The suspension of BHF NPLs functionalized with CA, a cationic surfactant cetylmethylammonium bromide (CTAB) and paraffin are used for the formation of Pickering emulsion system (Fig. 7). The total of 70 ml of the aqueous suspension of BHF-CA (0.34 mg/ml) and CTAB (mass ratio CTAB/BHF-CA = 0.01) is heated above 70 °C and stirred with a homogenizer at 3000 rpm. Separately, the 6.5 g of paraffin wax is melted in a dryer at 80 °C. The melted wax is poured into the heated mixture. The mixture is stirred at 3000 rpm for 32 min. After 32 min, the speed of stirring is increased to 8000 rpm for 3 min. After this, the mixture is left to cool down without stirring. During the cooling, the paraffin wax solidifies. The wax balls coated BHF NPLs are separated from the liquid with a vacuum filtration and rinsed with ethanol.

The dry wax balls are resuspended in methanol, heated to 50 °C and stirred with an overhead stirrer. The polar ligand 3 from Fig. 4 or as described elsewhere herein, e.g., 1-[4-(methylsulfonyl)phenyl]-4-[3-(triethoxysilyl)propyl]piperidine (Fig. 4), is dissolved in a 10 ml of methanol. The mass of ligand is adjusted to 3 molecules/nm² of the NPLs (such that the surface density achieved on the first face is approximately 1 ligands/nm²). The solution of ligand is added dropwise over 20 minutes. The mixture is additionally stirred for 3 h. After the reaction time is finished, the reaction mixture is cooled down without stirring. The wax balls are vacuum filtered, washed with 500 ml ethanol and left to dry at ambient conditions. The dried wax balls are mixed with chloroform and treated with an ultrasonic probe (200 W s ON, 1 s OFF, 1min). The ME NPLs are collected by centrifugation (5000 rpm, 5 min). The collected NPLs are washed with chloroform and centrifugated three times. After the final washing and centrifugation, they are dispersed in chloroform. The ME NPLs are subsequently hydrophobized as in Example 1, i.e., with (heptadecafluoro-1,1,2,2-tetrahydrodecyl)triethoxysilane (nominal fraction 10 molecules/nm2) 5 in 1,2-dichlorobenzene by heating the reaction mixture at 120 °C for 3 h.

### EXAMPLE 4

In Example 4 the ME NPLs 1 are obtained using the same procedure as described in Example 3. The ME NPLs collected after the final washing are dispersed in methanol. The second polar ligand 4, e.g., N-hexyl-4-((8-(triethoxysilyl)octyl)sulfonyl)aniline (Fig. 5), with antiparallel orientation of electric dipole is used for functionalization of the remaining bare side of the ME NPLs. The second ligand is dissolved in 10 ml of methanol. The suspension of the primary ME NPLs (i.e., the suspension obtained as in Example 3 prior to the hydrophobization step) is heated to 50°C. The methanol solution of the second polar ligand is added dropwise in the span of 20 minutes. The reaction mixture is stirred under reflux for 3 hours. After the end of reaction, the ME NPLs are washed with methanol with intermediate centrifugation at 5000 rpm for 5 minutes for three times. The washed secondary ME NPLs are dispersed in 1,2-dichlorobenzene and hydrophobized as described in Example 3.

### List of Reference Signs

- 1: Magnetoelectric Nanostructure
- 2: Flattened Body
- 3: First Polar Ligand
- 4: Second Polar Ligand
- 5: Insulating coating

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### References

A number of publications are cited above in order to more fully describe and disclose the invention and the state of the art to which the invention pertains. Full citations for these references are provided below. The entirety of each of these references is incorporated herein.
[1] Gao, R.; Zhang, Q.; Xu, Z.; Wang, Z.; Chen, G.; Fu, C.; Deng, X.; Cai, W. Anomalous magnetoelectric coupling effect of CoFe2O4-BaTiO3 binary mixed fluids. ACS Applied Electronic Materials 2019, 1, 1120-1132.
[2] Wu, H.; Ao, H.; Li, W.; Zeng, Z.; Gao, R.; Fu, C.; Chen, G.; Deng, X.; Wang, Z.; Lei, X. Improvement of magnetoelectric coupling effect in Ba0. 8Sr0. 2TiO3-Co0. 5Cu0. 5Fe2O4 multiferroic fluids by tuning the composition. Materials Today Chemistry 2021, 21, 100511.
[3] Wu, H.; Xu, R.; Qin, X.; Gao, R.; Wang, Z.; Fu, C.; Cai, W.; Chen, G.; Deng, X. Effect of volume fraction on magnetoelectric coupling effect of Co 0.1 Cu 0.9 Fe 2 O 4/Ba 0.8 Sr 0.2 TiO 3 composite liquid. Applied Physics A 2020, 126, 1-11*.*
[4] Gao, R.; Xu, Z.; Bai, L.; Zhang, Q.; Wang, Z.; Cai, W.; Chen, G.; Deng, X.; Cao, X.; Luo, X. Electric field-induced magnetization rotation in magnetoelectric multiferroic fluids. Advanced Electronic Materials 2018, 4, 1800030.
[5] Gao, R.; Zhang, Q.; Xu, Z.; Wang, Z.; Cai, W.; Chen, G.; Deng, X.; Cao, X.; Luo, X.; Fu, C. Strong magnetoelectric coupling effect in BaTiO 3@ CoFe 2 O 4 magnetoelectric multiferroic fluids. Nanoscale 2018, 10, 11750-11759.
[6] Mertelj, A.; Lisjak, D.; Drofenik, M.; Čopič, M. Ferromagnetism in suspensions of magnetic platelets in liquid crystal. *Nature* **2013,** *504,* 237-241, doi:10.1038/nature12863.
[7] Mertelj, A.; Osterman, N.; Lisjak, D.; Čopič, M. Magneto-optic and converse magnetoelectric effects in a ferromagnetic liquid crystal. *Soft Matter* **2014,** 10, 9065-9072.
[8] Medle Rupnik, P.; Lisjak, D.; Čopič, M.; Mertelj, A. Ferromagnetic liquid crystals for magnetic field visualisation. *Liquid Crystals* **2015,** *42,* 1684-1688.
[9] Medle Rupnik, P.; Lisjak, D.; Čopič, M.; Čopar, S.; Mertelj, A. Field-controlled structures in ferromagnetic cholesteric liquid crystals. *Science Advances* **2017,** *3,* e1701336, doi:doi:10.1126/sciadv.1701336.
[10] Sahoo, R.; Rasna, M.V.; Lisjak, D.; Mertelj, A.; Dhara, S. Magnetodielectric and magnetoviscosity response of a ferromagnetic liquid crystal at low magnetic fields. Applied Physics Letters 2015, 106, doi:10.1063/1.4918995.

## Claims

1. A magnetoelectric liquid, comprising:
magnetoelectric nanostructures dispersed in a solvent, wherein
each said magnetoelectric nanostructure comprises a flattened body having a first face, a second face and a magnetic dipole; and
the first face of the flattened body is functionalised with a first polar ligand such that each said nanostructure has an electric dipole; and wherein
the magnetic dipole has a normal magnetic component that is perpendicular to a basal plane of the flattened body; and
the electric dipole has a normal electric component that is perpendicular to the basal plane of the flattened body; and wherein
in a majority of the magnetoelectric nanostructures in the magnetoelectric liquid, the normal magnetic component and the normal electric component are parallel, or in a majority of the magnetoelectric nanostructures in the magnetoelectric liquid, the normal magnetic component and the normal electric component are antiparallel.

2. The magnetoelectric liquid of claim 1, wherein:
the volume % of magnetoelectric nanostructures with their normal magnetic component parallel to their normal electric component is at least twice the volume % of magnetoelectric nanostructures with their normal magnetic component antiparallel to their normal electric component; or
the volume % of magnetoelectric nanostructures with their normal magnetic component antiparallel to their normal electric component is at least twice the volume % of magnetoelectric nanostructures with their normal magnetic component parallel to their normal electric component.

3. The magnetoelectric liquid of claim 1 or claim 2, wherein:
the normal magnetic component and the normal electric component are parallel in substantially all magnetoelectric nanostructures; or
the normal magnetic component and the normal electric component are antiparallel in substantially all magnetoelectric nanostructures.

4. The magnetoelectric liquid of any one of claims 1 to 3, wherein:
the flattened body has a diameter in the range 20-300nm.

5. The magnetoelectric liquid of any one of claims 1 to 4, wherein:
the flattened body comprises a metal or a metal oxide; or
the flattened body comprises a barium hexaferrite.

6. The magnetoelectric liquid of any one of claims 1 to 5, wherein:
the second face of the flattened body is functionalised with a second polar ligand; such that
the second polar ligand increases the magnitude of the electric dipole in each said nanostructure.

7. The magnetoelectric liquid of any one of claims 1 to 6, wherein:
the first polar ligand comprises an anchor, for binding to the first face of the flattened body; and
a polar moiety.

8. The magnetoelectric liquid of claim 6, wherein:
the second polar ligand comprises an anchor, for binding to the second face of the flattened body; and a polar moiety.

9. The magnetoelectric liquid of claim 6, wherein:
the first and/or second polar ligands are according to one of the following formulae: 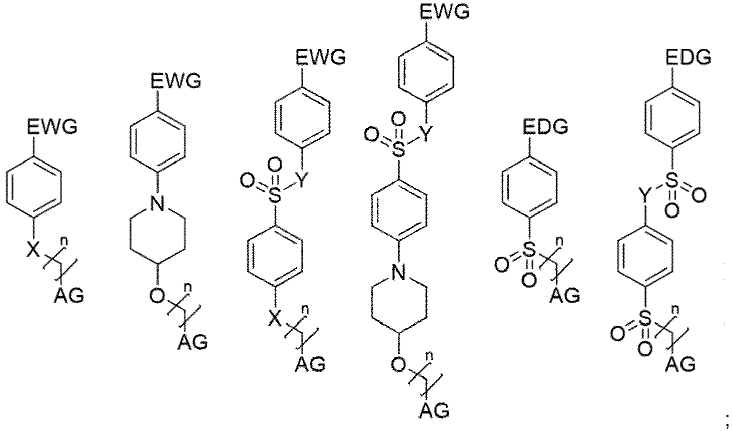
wherein EWG is an electron withdrawing group, EDG is an electron donating group, AG is an anchor, X is O or NH, Y is O or NH, and n is 1-12.

10. The magnetoelectric liquid of any one of claims 1 to 9, wherein:
the solvent is a nonpolar solvent.

11. The magnetoelectric liquid of any one of claims 1 to 10, comprising:
nonpolar molecules which stabilise the dispersion of magnetoelectric nanostructures by forming a coating around each said magnetoelectric nanostructure.

12. A method of preparing a magnetoelectric liquid, comprising:
forming a magnetoelectric nanostructure by assembling a flattened body having a first face, a second face and a magnetic dipole at a phase boundary and selectively functionalising the first face of the flattened body with a first polar ligand that gives the nanostructure an electric dipole, wherein:
the phase boundary is substantially flat and assembling the flattened body is carried out under an external magnetic field, or
the phase boundary is curved and formed in an emulsion, and the method further comprises a subsequent separation step which is carried out under simultaneous external magnetic and external electric fields; and
dispersing the magnetoelectric nanostructure in a solvent.

13. The method of preparing a magnetoelectric liquid of claim 12, further comprising:
functionalising the second face of the flattened body with a second polar ligand, such that the magnitude of the electric dipole is increased.

14. The method of preparing a magnetoelectric liquid of claim 12 or claim 13, further comprising:
a hydrophobization step wherein the magnetoelectric nanostructure is coated in a non-polar molecule.

15. A magnetoelectric nanostructure that is the magnetoelectric nanostructure defined in any one of claims 1 and 4 to 9.
